# EUROPÄISCHE PATENTSCHRIFT

(11) **EP 3 498 503 B1**
(45) Veröffentlichungstag und Bekanntmachung des Hinweises auf die Patenterteilung: **07.07.2021**
(21) Anmeldenummer: 18211213.6
(22) Anmeldetag: 10.12.2018
(51) Int. Cl.: B60C 23/20, B60C 23/04

(54) **REIFENDRUCKÜBERWACHUNGSEINHEIT MIT ERWEITERBARER PROGRAMMBIBLIOTHEK UND VERFAHREN ZUM ERGÄNZEN EINER PROGRAMMBIBLIOTHEK EINER REIFENDRUCKÜBERWACHUNGSEINHEIT**
TYRE PRESSURE MONITORING UNIT WITH EXPANDABLE PROGRAM LIBRARY AND METHOD FOR EXPANDING A PROGRAM LIBRARY OF A TYRE PRESSURE MONITORING UNIT
UNITÉ DE SURVEILLANCE DE PRESSION DE PNEUMATIQUE À BIBLIOTHÈQUE DE PROGRAMME EXTENSIBLE ET PROCÉDÉ PERMETTANT DE COMPLÉTER UNE BIBLIOTHÈQUE DE PROGRAMME D'UNE UNITÉ DE SURVEILLANCE DE PRESSION DE PNEUMATIQUE

(30) Priorität: 18.12.2017 DE 102017130295
(43) Veröffentlichungstag der Anmeldung: 19.06.2019
(73) Patentinhaber: Huf Baolong Electronics Bretten GmbH, 75015 Bretten (DE)
(72) Erfinder: Wagner, Markus, 71638 Ludwigsburg (DE); Vögeli, Patrick, 76227 Karlsruhe (DE); Brand, Peter, 75249 Kieselbronn (DE)
(74) Vertreter: Twelmeier Mommer & Partner

(56) Entgegenhaltungen:
- WO-A1-2011/061455
- WO-A2-2009/059274
- US-A1- 2014 122 982
- US-A1- 2015 015 387
- US-A1- 2016 303 926

## Beschreibung

Die vorliegende Erfindung betrifft eine Reifendrucküberwachungseinheit mit einem Mikrocontroller, der einen Programmspeicher enthält, und einem an den Mikrocontroller angeschlossenen Datenspeicher, in dem eine Bibliothek von Steuerungsprogrammen zur Steuerung der Mess- und Sendetätigkeit der Reifendrucküberwachungseinheit gespeichert ist, aus welcher der Mikrocontroller in Abhängigkeit von empfangen Steuersignalen ein Steuerungsprogramm auswählt und in seinen Programmspeicher schreibt.

Derzeit sind für Fahrzeuge etwa 100 verschiedene Reifendrucküberwachungssysteme gebräuchlich, bei denen jeweils eine am Rad zu montierende Reifendrucküberwachungseinheit den Reifendruck misst und drahtlos an eine Zentraleinheit überträgt. Die verschiedenen Reifendrucküberwachungssysteme verwenden für die drahtlose Übertragung von Druckdaten zwar dieselben Frequenzbereiche, nämlich bei 315 MHz oder 433 MHz, unterscheiden sich aber unter anderem hinsichtlich der Mess- und Sendeintervalle, den Druckschwellen, die eine Sendetätigkeit auslösen, und dem Aufbau bzw. Format der gesendeten Daten. In Werkstätten besteht ein Bedarf nach Reifendrucküberwachungseinheiten, die sich universell für alle gebräuchlichen Reifendrucküberwachungssysteme einsetzen lassen.

Damit eine Reifendrucküberwachungseinheit universell verwendbar ist, muss ihre Steuerung passend zu dem jeweiligen Reifendrucküberwachungssystem programmiert werden, so dass die Mess- und Sendetätigkeit mit den für das betreffende System vorgeschriebenen Intervallen und Schwellenwerten erfolgt, die zu übertragenden Datenprotokolle systemgemäß aufgebaut sind und gegebenenfalls anderen Randbedingungen der Mess- und Sendetätigkeit des Reifendrucküberwachungssystems eingehalten werden.

Aus der US 7 518 495 B2 ist eine nahezu universell verwendbare Reifendrucküberwachungseinheit vorhanden, die einen Datenspeicher enthält, in dem eine Bibliothek von Steuerungsprogrammen zur Steuerung der Mess- und Sendetätigkeit der Reifendrucküberwachungseinheit gespeichert ist. Durch ein Steuerungssignal, das drahtlos von einem Handgerät ausgesendet wird, kann eines der Steuerungsprogramme aus der Bibliothek ausgewählt und dann für die Steuerung der Mess- und Sendetätigkeit dieser Reifendrucküberwachungseinheit verwendet werden. Auf diese Weise kann eine Reifendrucküberwachungseinheit in einer Werkstatt passend für ein gegebenes Reifendrucküberwachungssystem hergerichtet werden.

Ein Problem der aus der US 7 518 495 B2 bekannten Reifendrucküberwachungseinheit besteht darin, dass sich die Programmbibliothek nicht ergänzen lässt. Wenn also ein neues Reifendrucküberwachungssystem auf den Markt kommt, das ein neues Steuerungsprogramm der Reifendrucküberwachungseinheit erfordert, können bestehende Reifendrucküberwachungseinheiten für dieses neue System nicht verwendet werden. Zwar kann der Hersteller bei der Herstellung neuer Reifendrucküberwachungseinheiten eine größere Bibliothek mit einem zusätzlichen Steuerungsprogramm vorsehen, jedoch ist ein Ergänzen der Programmbibliothek von Reifendrucküberwachungseinheiten in Werkstätten nicht möglich. Es ist deshalb für Werkstätten unwirtschaftlich größere Stückzahlen dieser Reifendrucküberwachungseinrichtung vorrätig zu halten.

Aus US 2015/0015387 A1 ist eine Reifendrucküberwachungseinheit bekannt, die einen Drucksensor, eine Sendeeinrichtung zum drahtlosen Senden von Druckdaten, eine Empfangseinrichtung zum Empfangen von drahtlosen Steuersignalen und einen Mikrocontroller aufweist. Zur Einrichtung einer solchen Reifendrucküberwachungseinheit wird Steuerungssoftware aus einer Bibliothek ausgewählt und dann drahtlos in die Reifendrucküberwachungseinheit geschrieben.

Aus US 2014 /0122982 A1 ist ein Verfahren zum Programmieren einer Reifendrucküberwachungseinheit bekannt, bei dem Daten als LF-Signale übertragen werden.

Aus WO 2009/059274 A2 ist ein Reifendrucküberwachungssystem bekannt, in dessen Zentraleinheit zusätzliche Programmdaten geschrieben werden können.

WO 2011/061455 A1 offenbart ein Reifendrucküberwachungssystem, dem mehrere Protokolle zur Verfügung stehen.

Aus US 2016/0303926 A1 sind Reifendrucküberwachungseinheiten bekannt, die sowohl Druck- als auch Temperatursensoren enthalten.

Aufgabe der Erfindung ist es deshalb, einen Weg aufzuzeigen, wie in einer Reifendrucküberwachungseinheit die Bibliothek für Steuerungsprogramme nach abgeschlossenem Herstellungsprozess um ein zusätzliches Steuerungsprogramm ergänzt werden kann. Insbesondere soll eine Ergänzung der Programmbibliothek in Werkstätten möglich sein.

Diese Aufgabe wird durch eine Reifendrucküberwachungseinheit mit den im Anspruch 1 angegebenen Merkmalen sowie durch ein Verfahren gemäß Anspruch 7 gelöst. Vorteilhafte Weiterbildungen der Erfindung sind Gegenstand von Unteransprüchen.

Eine erfindungsgemäße Reifendrucküberwachungseinheit enthält einen Drucksensor, einen Temperatursensor, eine Sendeeinrichtung zum drahtlosen Senden von Druck- und Temperaturdaten als HF-Signale, beispielsweise im 315 MHz Bereich oder im 433 MHz Bereich, sowie eine Empfangseinrichtung zum Empfangen von drahtlosen Steuersignalen als LF-Signale, beispielsweise im Bereich zwischen 100 kHz und 200 kHz, etwa 125 kHz. Die Mess- und Sendetätigkeit der Reifendrucküberwachungseinheit wird von einem Mikrocontroller gesteuert, der einen Programmspeicher enthält.

Die Programmspeicher von gebräuchlichen Mikrocontrollern sind zu klein, um Steuerungsprogramme für alle gängigen Reifendrucküberwachungssysteme zu enthalten. An die Mikrocontroller ist deshalb ein Datenspeicher angeschlossen, der eine Bibliothek von Steuerungsprogrammen zur Steuerung der Mess- und Sendetätigkeit der Reifendrucküberwachungseinheit enthält. In Abhängigkeit von empfangenen Steuersignalen wählt der Mikrocontroller ein Steuerungsprogramm aus dieser Bibliothek aus und schreibt es in seinen Programmspeicher. Zudem kann eine erfindungsgemäße Reifendrucküberwachungseinheit durch ein spezielles Steuersignal, das von der Empfangseinrichtung empfangen wird, dazu veranlasst werden, ein zusätzliches Steuerungsprogramm, das von der Empfangseinrichtung in Form von LF-Signalen empfangen wird, in den Datenspeicher zu übertragen und der dort gespeicherten Programmbibliothek hinzuzufügen.

Eine Datenübertragung durch LF-Signale ist verhältnismäßig langsam und deshalb für die Übertragung größerer Datenmengen an sich nicht ideal, jedoch ist eine Ergänzung der in dem Datenspeicher der Reifendrucküberwachungseinheit vorhandenen Programmbibliothek relativ selten erforderlich, und wenn sie erforderlich ist, müssen im Regelfall nur ein oder zwei zusätzliche Steuerungsprogramme übertragen werden. Ein Datenvolumen von 8 kByte lässt sich problemlos in weniger als einer halben Minute in Form von LF-Signalen auf eine Reifendrucküberwachungseinheit übertragen, so dass sich die Programmbibliothek in der Regel innerhalb von einer Minute oder weniger ergänzen lässt. Ein Vorrat von Reifendrucküberwachungseinheiten kann somit in einer Werkstatt relativ problemlos an die Anforderungen neuer Reifendrucküberwachungssysteme angepasst werden.

Eine vorteilhafte Weiterbildung der Erfindung sieht vor, dass der Mikrocontroller das zusätzliche Steuerungsprogramm nach Erhalt auf Übertragungsfehler überprüft und eine fehlerfreie Übertragung durch ein Signal, beispielsweise ein von der Sendeeinrichtung ausgesendetes HF-Signal, quittiert. Auf diese Weise kann der Übertragungsvorgang bei Bedarf wiederholt werden.

Eine weitere vorteilhafte Weiterbildung der Erfindung sieht vor, dass das zusätzliche Steuerungsprogramm nach Empfang zunächst in dem Programmspeicher abgelegt und dann von dort in den Datenspeicher übertragen wird. Auf diese Weise ist es dem Mikrocontroller besonders einfach und rasch möglich, das erhaltene Steuerungsprogramm auf Übertragungsfehler zu prüfen.

Die Übertragung des zusätzlichen Steuerungsprogramms in den Datenspeicher erfolgt mittels eines Ladeprogramms, das durch Empfang eines Steuersignals aktiviert wird. Das Ladeprogramm kann in einem Grundzustand des Mikrocontrollers, in dem dieser vom Hersteller ausgeliefert wird, in dem Programmspeicher abgelegt sein. Da der Platz in dem Programmspeicher begrenzt ist, wird bevorzugt bei Aktivierung des Ladeprogramms zumindest ein Teil des Ladeprogramms in dem Programmspeicher des Mikrocontrollers mit dem zusätzlichen Steuerungsprogramm überschrieben. Nachdem das zusätzliche Steuerungsprogramm dann in den Datenspeicher übertragen wurde, kann das Ladeprogramm aus dem Datenspeicher wieder in den Programmspeicher kopiert werden, so dass bei Bedarf ein weiteres zusätzliches Steuerungsprogramm empfangen und in den Datenspeicher übertragen werden kann.

Eine weitere vorteilhafte Weiterbildung der Erfindung sieht vor, dass das Ladeprogramm unter Berücksichtigung von empfangenen Steuerungssignalen ein Steuerungsprogramm aus der Bibliothek des Datenspeichers auswählen und den Mikroprozessor veranlassen kann, dieses in den Programmspeicher zu übertragen. Auch dabei kann das Ladeprogramm ganz oder vollständig in dem Programmspeicher des Mikrocontrollers von dem betreffenden Steuerungsprogramm überschrieben werden.

Das Reifendrucküberwachungseinheit kann dabei so aufgebaut sein, dass alle oder einige Teile des Ladeprogramms, bevor sie in dem Programmspeicher des Mikrocontrollers überschrieben werden, in den Datenspeicher übertragen werden. Es ist aber auch möglich, dass eine Kopie des Ladeprogramms, bzw. der bei Bedarf zu überschreibenden Teile ständig in dem Datenspeicher verbleibt und von dort bei Bedarf in den Programmspeicher kopiert wird.

Eine vorteilhafte Weiterbildung der Erfindung sieht vor, dass der Datenspeicher wenigstens 16-mal so groß ist wie der Programmspeicher. Beispielsweise kann der Datenspeicher 32-mal so groß wie der Programmspeicher oder noch größer sein. Der Programmspeicher hat typischerweise eine Größe von 32 kByte oder weniger, beispielsweise 16 kByte. Der Datenspeicher kann beispielsweise eine Größe von 256 kByte oder mehr, beispielsweise 512kByte oder mehr haben. Geeignet für den Datenspeicher und den Programmspeicher sind beispielsweise EEPROM Speicher, insbesondere Flash EEPROM Speicher.

Bei einem erfindungsgemäßen Verfahren zum Ergänzen einer Bibliothek von Steuerungsprogrammen in einem an einen Mikroprozessor einer Reifendrucküberwachungseinheit angeschlossenen Datenspeicher um ein zusätzliches Steuerungsprogramm wird das zusätzliche Steuerungsprogramm in Form von LF-Signalen von einer Empfangseinrichtung der Reifendrucküberwachungseinrichtung empfangen. Das zusätzliche Steuerungsprogramm wird dann, beispielsweise mittels eines Ladeprogramms, in einem Programmspeicher abgelegt, der in den Mikrocontroller integriert ist und das zusätzliche Steuerungsprogramm dann aus dem Programmspeicher gelesen und in den Datenspeicher geschrieben.

Eine vorteilhafte Weiterbildung der Erfindung sieht vor, dass der Mikrocontroller über einen SPI-Bus mit dem Datenspeicher kommuniziert. Das zusätzliche Steuerungsprogramm wird also bevorzugt über einen SPI-Bus von dem Mikrocontroller in den Datenspeicher übertragen.

Eine weitere vorteilhafte Weiterbildung der Erfindung sieht vor, dass nach dem Ablegen des zusätzlichen Steuerungsprogramms in dem Datenspeicher das Ladeprogramm aus dem Datenspeicher in den Programmspeicher übertragen wird, wobei das Ladeprogramm bei Aktivierung durch drahtlose LF-Steuersignale, die von der Reifendrucküberwachungseinrichtung empfangen werden, eines der Steuerungsprogramme aus der Bibliothek auswählt und in den Programmspeicher lädt.

Weitere Einzelheiten und Vorteile der Erfindung werden an einem Ausführungsbeispiel unter Bezugnahme auf die beigefügten Zeichnungen erläutert.

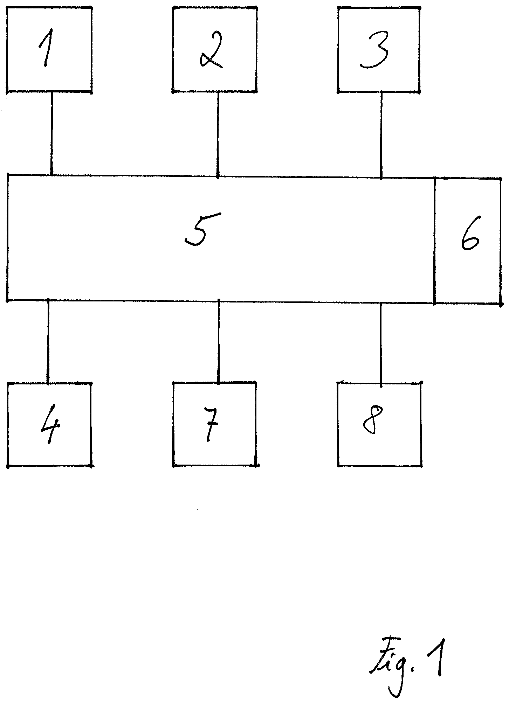

Figur 1 zeigt eine schematische Darstellung eines Ausführungsbeispiels einer erfindungsgemäßen Reifendrucküberwachungseinheit.

Die in Figur 1 schematisch dargestellte Reifendrucküberwachungseinheit enthält einen Drucksensor 1, einen Temperatursensor 2, eine Sendeeinrichtung 3 zum drahtlosen Senden von Druck- und Temperaturdaten als HF-Signale, eine Empfangseinrichtung 4 zum Empfangen von drahtlosen Steuersignalen als LF-Signale, einen Mikrocontroller 5, der einen Programmspeicher 6 enthält, und einen an den Mikrocontroller 5 angeschlossenen Datenspeicher 7, der eine Bibliothek von Steuerungsprogrammen zur Steuerung der Mess- und Sendetätigkeit der Reifendrucküberwachungseinheit enthält, aus welcher der Mikrocontroller 5 in Abhängigkeit von empfangenen Steuersignalen ein Steuerungsprogramm auswählt und dann in seinen Programmspeicher 6 schreibt. Zusätzlich enthält die Reifendrucküberwachungseinheit eine Stromquelle 8, beispielsweise eine Batterie oder einen Generator, insbesondere ein piezoelektrische Generator.

Bei dem dargestellten Ausführungsbeispiel sind der Drucksensor 1 und der Temperatursensor 2 an den Mikrocontroller 5 angeschlossen. Der Drucksensor 1 und der Temperatursensor 2 können aber auch ebenso wie der Programmspeicher 6 in den Mikrocontroller 5 integriert sein. Die Reifendrucküberwachungseinheit kann zusätzlich weitere Sensoren, beispielsweise Beschleunigungssensoren, enthalten. Die einzelnen Komponenten der Reifendrucküberwachungseinheit sind in einem Gehäuse angeordnet, das bestimmungsgemäß an einem Reifen montiert wird, beispielsweise an einem Reifenventil.

Wenn die Reifendrucküberwachungseinheit vom Hersteller ausgeliefert wird, ist in dem Programmspeicher des Mikrocontrollers 5 ein Ladeprogramm gespeichert. Bei Aktivierung des Ladeprogramms durch Steuersignale, die von der Empfangseinrichtung 4 empfangen wurden, kann der Mikroprozessor 5 mittels des Ladeprogramms aus der im Datenspeicher 7 gespeicherten Programmbibliothek ein Steuerungsprogramm auswählen, das durch die empfangenen Steuerungssignale spezifiziert wurde, und dieses dann in seinen Programmspeicher 6 laden. Auf diese Weise kann die Reifendrucküberwachungseinheit also an ein gegebenes Reifendrucküberwachungssystem angepasst werden, beispielsweise um bei einem Fahrzeug mit einem solchen System eine einzelne Reifendrucküberwachungseinheit zu ersetzen. Da der Speicherplatz in dem Programmspeicher 6 begrenzt ist, kann es vorteilhaft sein, wenn dabei das Ladeprogramm ganz oder teilweise mit dem ausgewählten Steuerungsprogramm überschrieben wird.

Durch geeignete Steuerungssignale, die von der Empfangseinrichtung 4 empfangen werden, kann dem Mikrocontroller 5 auch die Übertragung eines weiteren Steuerungsprogramms durch LF-Signale angekündigt werden. Das Ladeprogramm veranlasst den Mikroprozessor 5 in diesem Fall, das weitere Steuerungsprogramm in den Programmspeicher 6 zu schreiben. Auch dabei kann das Ladeprogramm ganz oder teilweise durch das Steuerungsprogramm überschrieben werden. Anschließend wird dieses weitere Steuerungsprogramm aus dem Programmspeicher 6 in den Datenspeicher 7 geschrieben und der dort vorhandenen Bibliothek von Steuerungsprogrammen hinzugefügt.

Falls dabei zuvor das Ladeprogramm in dem Programmspeicher 6 des Mikroprozessors 5 von dem zusätzlichen Steuerungsprogramm überschrieben wurde, wird nun im Anschluss an das Schreiben des zusätzlichen Steuerungsprogramms in den Datenspeicher 7 das Ladeprogramm wieder aus dem Datenspeicher 7 in den Programmspeicher 6 des Mikrocontrollers 5 kopiert. Der Mikrocontroller 5 befindet sich dann also wieder in seinem Grundzustand, in dem er in den Reifendrucküberwachungseinheit vom Hersteller der Reifendrucküberwachungseinheit ausgeliefert wurde, so dass durch geeignete Steuerungssignale eines der nun in dem Datenspeicher 7 enthaltenen Steuerungsprogramme ausgewählt und in den Programmspeicher 6 des Mikrocontrollers 5 geschrieben werden kann.

Das Ladeprogramm kann in der Programmbibliothek in dem Datenspeicher 7 ständig gespeichert sein, so dass es bei Bedarf immer wieder in den Programmspeicher 6 des Mikrocontrollers 5 kopiert werden kann. Es ist aber auch möglich, dass das Ladeprogramm aus dem Programmspeicher 6 ganz oder teilweise in den Datenspeicher 7 kopiert wird, bevor die entsprechenden Teile des Ladeprogramms in den Programmspeicher 6 durch ein ausgewähltes Steuerungsprogramm oder ein in Form von LF-Signalen empfangenes zusätzliches Steuerungsprogramm überschrieben wird.

Der Datenspeicher 7 ist wesentlich größer als der Programmspeicher 6 beispielsweise 16-mal so groß oder noch größer. Beispielsweise kann der Programmspeicher 6 eine Größe von 32 kByte oder 16 kByte haben, während der Datenspeicher 7 eine Größe von wenigstens 256 kByte hat, beispielsweise 512 kByte oder mehr.

Der Mikrocontroller 5 kann über einen SPI-Bus mit dem Datenspeicher 7 und gegebenenfalls auch anderen Komponenten der Reifendrucküberwachungseinheit kommunizieren.

Sowohl der Programmspeicher 6 als auch Datenspeicher 7 der Reifendrucküberwachungseinheit sind nichtflüchtige Speicher, deren Inhalt immer wieder neu überschrieben werden kann. Geeignet sind beispielsweise EEPROM Speicher, insbesondere Flash EEPROM Speicher.

### Bezugszeichenliste

- 1: Drucksensor
- 2: Temperatursensor
- 3: HF-Sendeeinrichtung
- 4: LF-Empfangseinrichtung
- 5: Mikrocontroller
- 6: Programmspeicher
- 7: Datenspeicher
- 8: Stromquelle

## Patentansprüche

1. Reifendrucküberwachungseinheit, mit
einem Drucksensor (1),
einem Temperatursensor (2),
einer Sendeeinrichtung (3) zum drahtlosen Senden von Druck- und Temperaturdaten als HF-Signale,
einer Empfangseinrichtung (4) zum Empfangen von drahtlosen Steuersignalen als LF-Signale,
einem Mikrocontroller (5), der einen Programmspeicher (6) enthält,
einem an den Mikrocontroller (5) angeschlossenen Datenspeicher (7), der eine Bibliothek von Steuerungsprogrammen zur Steuerung der Mess- und Sendetätigkeit der Reifendrucküberwachungseinheit enthält, aus welcher der Mikrocontroller (5) in Abhängigkeit von empfangenen Steuersignalen ein Steuerungsprogramm auswählt und in seinen Programmspeicher (6) schreibt, **gekennzeichnet durch**
ein Ladeprogramm, das bei Aktivierung durch ein Steuersignal den Mikrocontroller (5) veranlasst, ein zusätzliches Steuerungsprogramm, das von der Empfangseinrichtung (4) empfangen wird, in den Datenspeicher (7) zu übertragen,
wobei das zusätzliche Steuerungsprogramm nach Empfang zunächst in dem Programmspeicher (6) abgelegt und dann von dort in den Datenspeicher (7) übertragen wird.

2. Reifendrucküberwachungseinheit nach Anspruch 1, **dadurch gekennzeichnet, dass** bei Aktivierung des Ladeprogramms zumindest ein Teil des Ladeprogramms in dem Programmspeicher (6) des Mikrocontrollers (5) mit dem zusätzlichen Steuerungsprogramm überschrieben wird.

3. Reifenüberwachungseinheit nach Anspruch 2, **dadurch gekennzeichnet, dass** nach dem Übertragen des zusätzlichen Steuerungsprogramms von dem Programmspeicher (6) in den Datenspeicher (7) das zusätzliche Steuerungsprogramm in dem Programmspeicher (6) mit dem Ladeprogramm bzw. dem zuvor in den Datenspeicher (7) übertragenen Teil des Ladeprogramms überschrieben wird.

4. Reifendrucküberwachungseinheit nach einem der vorstehenden Ansprüche, **dadurch gekennzeichnet, dass** der Programmspeicher (6) eine Größe von 32 kByte oder weniger hat.

5. Reifendrucküberwachungseinheit nach einem der vorstehenden Ansprüche **dadurch gekennzeichnet, dass** der Datenspeicher (7) eine Größe von wenigstens 512 kByte hat.

6. Reifendrucküberwachungseinheit nach einem der vorstehenden Ansprüche **dadurch gekennzeichnet, dass** der Datenspeicher (7) wenigstens 16 mal so groß ist wie der Programmspeicher (6), vorzugsweise wenigstens 32 mal so groß.

7. Verfahren zum Ergänzen einer Bibliothek von Steuerungsprogrammen in einem an einen Mikrocontroller (5) einer Reifendrucküberwachungseinheit angeschlossenen Datenspeicher (7) um ein zusätzliches Steuerungsprogramm, wobei
das zusätzliche Steuerungsprogramm in Form von LF-Signalen von einer Empfangseinrichtung (4) der Reifendrucküberwachungseinrichtung empfangen wird,
das zusätzliche Steuerungsprogramm dann in einem Programmspeicher (6) abgelegt wird, der in den Mikrocontroller (5) integriert ist, und
das zusätzliche Steuerungsprogramm aus dem Programmspeicher (6) gelesen und in den Datenspeicher (7) geschrieben wird.

8. Verfahren nach Anspruch 7, **dadurch gekennzeichnet, dass** das zusätzliche Steuerungsprogramm über einen SPI-Bus von dem Mikrocontroller (5) in den Datenspeicher (7) übertragen wird.

9. Verfahren nach Anspruch 8, **dadurch gekennzeichnet, dass** nach dem Ablegen des zusätzlichen Steuerungsprogramms in dem Datenspeicher (7) ein Ladeprogramm aus dem Datenspeicher (7) in den Programmspeicher (6) übertragen wird, das bei Aktivierung durch drahtlose LF-Steuersignale, die von der Reifendrucküberwachungseinheit empfangen werden, eines der Steuerungsprogramme aus der Bibliothek auswählt und in den Programmspeicher (6) lädt.

## Claims

1. A tire pressure monitoring unit comprising
a pressure sensor (1),
a temperature sensor (2),
a transmitter (3) for wireless transmission of pressure and temperature data in the form of HF signals,
a receiver (4) for receiving wireless control signals in the form of LF signals,
a microcontroller (5) comprising a program memory (6),
a data storage device (7) that is connected to the microcontroller (5) and that contains a library of control programs for controlling the measurement and transmission activity of the tire pressure monitoring unit, from which library the microcontroller (5) selects, on the basis of received control signals, a control program and writes it into its program memory (6),
**characterized by**
a loading program that, when activated by a control signal, causes the microcontroller (5) to transfer into the data storage device (7) an additional control program that is received by the receiver (4),
wherein the additional control program after receipt is initially stored in the program memory and then transferred from there into the data storage device (7).

2. A tire pressure monitoring unit according to claim 1, **characterized in that** upon activation of the loading program at least part of the loading program in the program memory (6) of the microcontroller (5) is overwritten with the additional control program.

3. A tire pressure monitoring unit according to claim 2, **characterized in that** transferal of the additional control program from the program memory (6) into the data storage device (7) the additional control program in the program memory (6) is overwritten with the loading program or with the part of the loading program previously transferred into the data storage device (7).

4. A tire pressure monitoring unit according to any one of the preceding claims, wherein the program memory (6) has a size of 32 kilobytes or less.

5. A tire pressure monitoring unit according to any one of the preceding claims, wherein the data storage device (7) has a size of at least 512 kilobytes.

6. A tire pressure monitoring unit according to any one of the preceding claims, wherein the data storage device (7) is at least 16 times as large as the program memory (6), preferably at least 32 times as large.

7. A method for adding, to a library of control programs in a data storage device (7) connected to a microcontroller (5) of a tire pressure monitoring unit, an additional control program, wherein
the additional control program is received in the form of LF signals by a receiver (4) of the tire pressure monitoring device,
the additional control program is then stored in a program memory (6) that is integrated into the microcontroller (5), and
the additional control program is read from of the program memory (6) and written into the data storage device (7).

8. A method according to claim 7, wherein the additional control program is transferred from the microcontroller (5) into the data storage device (7) via an SPI bus.

9. A process according to claim 8, wherein after the additional control program has been stored in the data storage device (7), a loading program is transferred from the data storage device (7) into the program memory (6), which upon activation by wireless LF control signals received by the tire pressure monitoring device selects one of the control programs from the library and loads it into the program memory (6).

## Revendications

1. Unité de surveillance de pression de pneu, dotée
d'un capteur de pression (1),
d'un capteur de température (2),
d'un système émetteur (3), destiné à émettre sans fil des données de pression et de température sous la forme de signaux HF,
d'un système récepteur (4), destiné à réceptionner des signaux de commande sans fil sous la forme de signaux BF,
d'un microcontrôleur (5), qui contient une mémoire de programmes (6), d'une mémoire de données (7) connectée sur le microcontrôleur (5), qui contient une bibliothèque de programmes de commande, destinés à commander l'opération de mesure et d'émission de l'unité de surveillance de pression de pneu, à partir de laquelle le microcontrôleur (5) sélectionne un programme de commande en fonction de signaux de commande réceptionnés et l'écrit dans sa mémoire de programmes (6),
**caractérisée par**
un programme de chargement, qui lorsqu'il est activé par un signal de commande, incite le microcontrôleur (5) à transférer dans la mémoire de données (7) un programme de commande additionnel, qui est réceptionné par le système récepteur (4),
après avoir été réceptionné, le programme de commande additionnel étant sauvegardé d'abord dans la mémoire de programmes (6) et de là, y est transféré dans la mémoire de données (7).

2. Unité de surveillance de pression de pneu selon la revendication 1, **caractérisée en ce que** lors de l'activation du programme de chargement, au moins une partie du programme de chargement est transcrite dans la mémoire de programmes (6) du microcontrôleur (5) avec le programme de commande additionnel.

3. Unité de surveillance de pression de pneu selon la revendication 2, **caractérisée en ce qu'**après le transfert du programme de commande additionnel de la mémoire de programmes (6) dans la mémoire de données (7), le programme de commande additionnel est transcrit dans la mémoire de programmes (6) avec le programme de chargement ou la partie du programme de chargement qui a été précédemment transférée dans la mémoire de données (7).

4. Unité de surveillance de pression de pneu selon l'une quelconque des revendications précédentes, **caractérisée en ce que** la mémoire de programmes (6) a une taille de 32 Koctets ou moins.

5. Unité de surveillance de pression de pneu selon l'une quelconque des revendications précédentes, **caractérisée en ce que** la mémoire de données (7) a une taille d'au moins 512 Koctets.

6. Unité de surveillance de pression de pneu selon l'une quelconque des revendications précédentes, **caractérisée en ce que** la mémoire de données (7) est au moins 16 fois plus grande que la mémoire de programmes (6), de préférence au moins 32 fois plus grande.

7. Procédé, destiné à compléter avec un programme de commande additionnel une bibliothèque de programmes de commande dans une mémoire de données (7) connectée sur un microcontrôleur (5) d'une unité de surveillance de pression de pneu,
le programme de commande additionnel étant réceptionné sous la forme de signaux BF par un système récepteur (4) de l'unité de surveillance de pression de pneu,
le programme de commande additionnel étant sauvegardé ensuite dans une mémoire de programmes (6) qui est intégrée au microcontrôleur (5),
et
le programme de commande additionnel étant lu dans la mémoire de programmes (6) et écrite dans la mémoire de données (7).

8. Procédé selon la revendication 7, **caractérisé en ce que** le programme de commande additionnel est transféré par l'intermédiaire d'un bus SPI du microcontrôleur (5) dans la mémoire de données (7).

9. Procédé selon la revendication 8, **caractérisé en ce qu'**après la sauvegarde du programme de commande additionnel dans la mémoire de données (7), un programme de chargement, qui lorsqu'il est activé par des signaux BF sans fil qui sont réceptionnés par l'unité de surveillance de pression de pneu, sélectionne l'un des programmes de commande dans la bibliothèque et le charge dans la mémoire de programmes (6) est transféré de la mémoire de données (7) dans la mémoire de programmes (6).
